# FASCICULE DE BREVET EUROPEEN

(11) **EP 2 515 093 B1**
(45) Date de publication et mention de la délivrance du brevet: **15.10.2014**
(21) Numéro de dépôt: 12163674.0
(22) Date de dépôt: 11.04.2012
(51) Int. Cl.: F04D 19/04, F04D 27/00, G01M 3/20

(54) **Procédé de contrôle d'un détecteur de fuites et détecteur de fuites**
Verfahren zur Kontrolle eines Leckdetektors, und Leckdetektor
Method for controlling a leak detector, and leak detector

(30) Priorité: 21.04.2011 FR 1101252
(43) Date de publication de la demande: 24.10.2012
(73) Titulaire: Adixen Vacuum Products, 74000 Annecy (FR)
(72) Inventeur: Rouveyre, Frédéric, 74000 Annecy (FR); Pierrejean, Didier, 74000 Annecy (FR); Nomine, Cyrille, 74000 Annecy (FR)
(74) Mandataire: Sogan, Gloria

(56) Documents cités:
- EP-A1- 0 549 004
- EP-A1- 2 042 849
- EP-A2- 1 767 790
- DE-A1- 10 308 420

## Description

La présente invention concerne un procédé de contrôle d'un détecteur de fuites et un détecteur de fuites associé comportant une pompe à vide secondaire ayant un rotor, telle qu'une pompe à vide turbomoléculaire, moléculaire ou hybride. L'invention s'applique plus particulièrement aux détecteurs de fuites susceptibles d'être déplacés, tels que détecteurs de fuites portables, à roulettes ou pouvant être déplacés par chariot.

En fonctionnement, le rotor d'une pompe à vide secondaire tourne à une vitesse de rotation très élevée, telle que plusieurs milliers de tours par minute, pour établir un vide poussé ou ultra poussé. Du fait de la très haute vitesse de rotation et de l'inertie du rotor, l'utilisateur doit attendre un certain temps après avoir commandé l'arrêt de la pompe à vide secondaire pour que l'arrêt du rotor soit effectif et pour qu'il puisse déplacer le détecteur de fuites sans risquer de l'endommager. En effet, un déplacement hâtif peut provoquer le grippage de la pompe à vide secondaire du fait de l'effet gyroscopique. Le déplacement du détecteur de fuites génère des forces de poussée pouvant dévier l'axe de rotation du rotor et entraîner son grippage. Ce risque existe même pour de petits déplacements. De tels systèmes sont décrits par exemple dans les documents EP2042849, DE10308420 et EP1767790.
Pour limiter ce risque, les fabricants préconisent d'attendre plusieurs minutes après la commande d'arrêt de la pompe à vide avant de déplacer le détecteur de fuites. Les durées d'attente préconisées dépendent du type de pompe à vide secondaire et de la vitesse de rotation du rotor au moment de la commande d'arrêt. Elles sont généralement comprises entre cinq et dix minutes. On constate cependant qu'en cours d'utilisation, certains utilisateurs ne respectent pas ces temps d'attente.
Ce manquement est principalement du au fait que la durée préconisée n'est pas la même pour
tous les détecteurs de fuites. Dès lors, elle n'est pas forcément connue par l'utilisateur au moment opportun. D'autres effets conduisent également à ce que ces délais d'attente ne soient pas respectés, par exemple lorsque l'utilisateur a mal estimé le temps d'attente écoulé ou encore s'il a oublié la recommandation des fabricants.

Ce problème est commun à tous les détecteurs de fuites susceptibles d'être déplacés et comportant une pompe à vide secondaire ayant un rotor.

Un des buts de la présente invention est de proposer un procédé de contrôle et un détecteur de fuites améliorés permettant de diminuer les risques de grippage par un déplacement trop hâtif du détecteur de fuites après son arrêt.

A cet effet, l'invention a pour objet un procédé de contrôle d'un détecteur de fuites comportant :
- une pompe à vide secondaire destinée à être raccordée à une pompe à vide primaire, la pompe à vide secondaire comportant un moteur, un rotor et un stator, ledit rotor étant susceptible d'être entraîné en rotation dans le stator par le moteur lorsque le moteur est alimenté, et
- au moins un moyen d'information apte à être alimenté électriquement, pour informer un utilisateur de l'état de fonctionnement du détecteur de fuites,
**caractérisé en ce qu'**en cas de coupure de l'alimentation du moteur, on récupère l'énergie cinétique de rotation du rotor de la pompe à vide secondaire sous forme d'énergie électrique pour alimenter le moyen d'information.

Selon une ou plusieurs caractéristiques du procédé de contrôle, prise seule ou en combinaison :
- on récupère l'énergie cinétique de rotation du rotor par l'intermédiaire du moteur,
- on affiche un message d'alerte sur un écran du moyen d'information lorsque l'écran est alimenté par l'énergie récupérée,
- on utilise l'énergie récupérée pour alimenter un moyen de remise à la pression atmosphérique de la pompe à vide primaire du détecteur de fuites et rétablir la pression atmosphérique à l'entrée de la pompe à vide primaire.

L'invention a aussi pour objet un détecteur de fuites comportant :
- une pompe à vide secondaire destinée à être raccordée à une pompe à vide primaire, la pompe à vide secondaire comportant un moteur, un rotor et un stator, ledit rotor étant susceptible d'être entraîné en rotation dans le stator par le moteur lorsque le moteur est alimenté, et
- au moins un moyen d'information apte à être alimenté électriquement, pour informer un utilisateur de l'état de fonctionnement du détecteur de fuites,
**caractérisé en ce que** le détecteur de fuites comporte en outre un moyen de récupération d'énergie pouvant récupérer l'énergie cinétique de rotation du rotor de la pompe à vide secondaire sous forme d'énergie électrique pour alimenter le moyen d'information.

Selon une ou plusieurs caractéristiques du détecteur de fuites, prise seule ou en combinaison :
- le moyen de récupération d'énergie est configuré pour récupérer l'énergie générée par le moteur de la pompe à vide secondaire,
- le détecteur de fuites comporte un moyen électronique de contrôle comprenant :
   - une carte de supervision connectée à un moyen d'alimentation,
   - une carte variateur de vitesse pilotée par la carte de supervision pour la commande de la vitesse de rotation du moteur de la pompe à vide secondaire, la carte variateur de vitesse comportant un convertisseur électronique de puissance réversible (ou hacheur) dont l'entrée est connectée au moyen d'alimentation de la carte de supervision, la carte de supervision étant également configurée pour piloter la carte variateur de vitesse pour récupérer l'énergie générée par le moteur,
- la carte de supervision est configurée pour alimenter un écran du moyen d'information et afficher un message d'alerte sur l'écran lorsque la carte de supervision est alimentée par l'énergie récupérée,
- le détecteur de fuites comporte une pompe à vide primaire et un moyen de remise à la pression atmosphérique de la pompe à vide primaire et la carte de supervision est également configurée pour piloter l'ouverture d'une vanne électromagnétique du moyen de remise à la pression atmosphérique lorsque la carte de supervision est alimentée par l'énergie récupérée.

Ainsi, lorsque l'utilisateur commande l'arrêt du détecteur de fuites, le moteur de la pompe à vide secondaire n'est plus alimenté. L'énergie cinétique accumulée et l'inertie font que le rotor continue quand même de tourner. Le moteur électrique alors entraîné mécaniquement fonctionne en générateur et fournit de l'énergie électrique à partir de l'énergie mécanique pour alimenter le moyen d'information du détecteur de fuites.

La diminution de la vitesse de rotation du rotor entraîne la baisse de l'énergie récupérée jusqu'à ce que cette dernière ne permettre plus une alimentation suffisante du moyen d'information. Lorsque le moyen d'information n'est plus alimenté, l'utilisateur sait que la pompe à vide secondaire est arrêtée ou tourne suffisamment lentement pour pouvoir être déplacée sans risque.

Il n'est donc plus nécessaire à l'utilisateur de connaître précisément la durée d'attente préconisée par le fabricant. La baisse de la puissance d'alimentation du moyen d'information signale la fin du délai d'attente indépendamment du type de pompe à vide secondaire ou de la vitesse de rotation au moment de la commande d'arrêt.

D'autres caractéristiques et avantages de l'invention ressortiront de la description suivante, donnée à titre d'exemple, sans caractère limitatif, en regard des dessins annexés sur lesquels:
- la figure 1 montre une vue en perspective d'un exemple de détecteur de fuites,
- la figure 2 représente une vue schématique d'éléments du détecteur de fuites de la figure 1,
- la figure 3 représente une vue schématique du câblage électrique d'éléments du détecteur de fuites de la figure 1,
- la figure 4 représente une vue schématique plus en détails du câblage de la figure 3, et
- la figure 5 représente un organigramme des étapes d'un procédé de contrôle du détecteur de fuites de la figure 1.

Sur ces figures, les éléments identiques portent les mêmes numéros de référence.

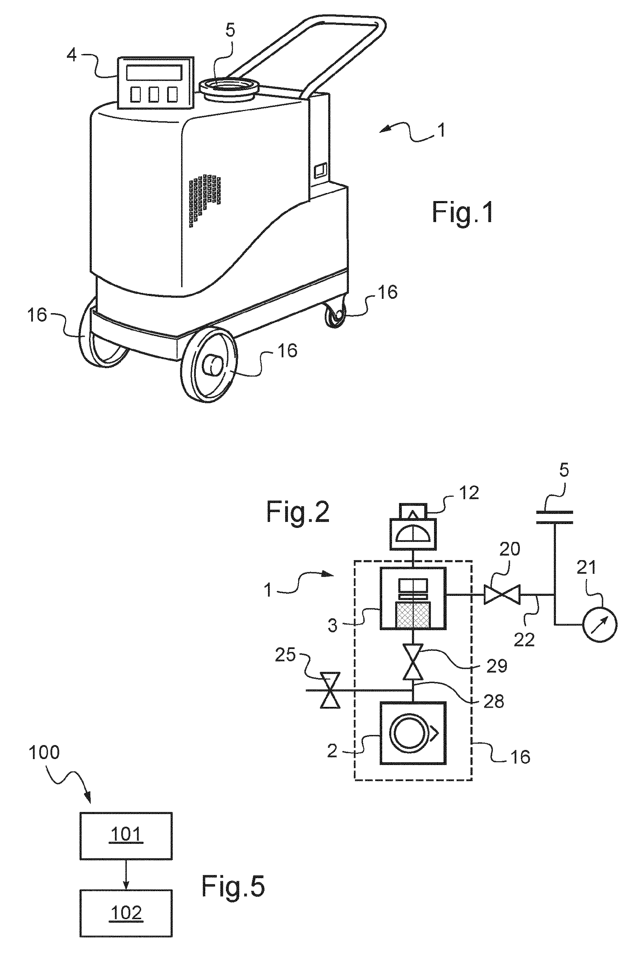

Les figures 1 et 2 représentent un exemple de détecteur de fuites 1.

Le détecteur de fuites 1 comporte une pompe à vide primaire 2, une pompe à vide secondaire 3 raccordée à la pompe à vide primaire 2, un spectromètre de masse 12 raccordé à l'aspiration de la pompe à vide secondaire 3 et au moins un moyen d'information 4 pour informer un utilisateur de l'état de fonctionnement du détecteur de fuites 1.

La pompe à vide secondaire 3 comporte un rotor, un stator et un moteur. Le rotor est entraîné en rotation dans le stator par le moteur lorsque le moteur est alimenté. On distingue sur la figure 1, l'entrée des gaz 5 du détecteur de fuites 1.

Le refoulement de la pompe à vide secondaire 3 est raccordée à l'aspiration de la pompe à vide primaire 2 par l'intermédiaire d'une canalisation de pompage 28 pourvue d'une première vanne électromagnétique d'isolation 29 du détecteur de fuites 1.

Selon un autre exemple non représenté, le détecteur de fuites ne comporte pas de pompe à vide primaire : la sortie de la pompe à vide secondaire 2 est destinée à être raccordée à une canalisation de pompage apte à fournir une pression de vide primaire.

La pompe à vide secondaire 3 est par exemple une petite pompe à vide turbomoléculaire ou hybride, d'une capacité de pompage comprise entre 5 et 401/s. La pompe à vide primaire 2 est par exemple une petite pompe rotative à palettes à joint d'huile.

Le moyen d'information 4 est apte à être alimenté électriquement. Il comporte par exemple un panneau de contrôle présentant un écran d'affichage et/ou un avertisseur sonore et/ou un témoin lumineux. Le panneau de contrôle peut comporter également un clavier de saisie. Le panneau de contrôle permet par exemple la mise en route et l'arrêt du détecteur de fuites 1. Alternativement, le détecteur de fuites 1 peut comporter un interrupteur d'alimentation générale. Le moyen d'information 4 informe par exemple l'utilisateur de la vitesse de rotation de la pompe à vide secondaire 3.

L'entrée 5 du détecteur de fuites 1 est adaptée pour être raccordée à une enceinte dont on désire vérifier fétanchéité. L'entrée 5 communique avec l'entrée de la pompe à vide secondaire 3 par l'intermédiaire d'une deuxième vanne électromagnétique d'isolation 20.

Le détecteur de fuites 1 peut également comporter un capteur de pression 21 pour déterminer la pression des gaz au niveau de la canalisation de raccordement 22 du détecteur de fuites 1, reliant la pompe à vide secondaire 3, en amont de la deuxième vanne électromagnétique d'isolation 20.

Le détecteur de fuites 1 présente un encombrement limité et un faible poids (inférieur à 30 kg). Il est donc portable ou transportable avec un chariot. Dans l'exemple représenté, le détecteur de fuites 1 présente ainsi quatre roulettes 16 dont trois sont visibles la figure 1. Le détecteur de fuite 1 peut ainsi être facilement déplacé sur le lieu de la recherche de fuites.

En fonctionnement, on mesure par exemple la pression partielle d'hélium contenue dans l'atmosphère résiduelle d'une enceinte raccordée à l'entrée 5 du détecteur de fuites 1. Le gaz contenu dans l'enceinte est aspiré par l'entrée 5 de la pompe à vide secondaire 3 et est refoulé dans la pompe à vide primaire 2. Une partie des gaz à analyser, contenant éventuellement le gaz traceur révélateur d'une fuite, est alors échantillonnée par le spectromètre de masse 12.

Le détecteur de fuites 1 comporte en outre un moyen de récupération d'énergie pouvant récupérer l'énergie cinétique de rotation du rotor de la pompe à vide secondaire 3 sous forme d'énergie électrique et la restituer pour alimenter le moyen d'information 4.

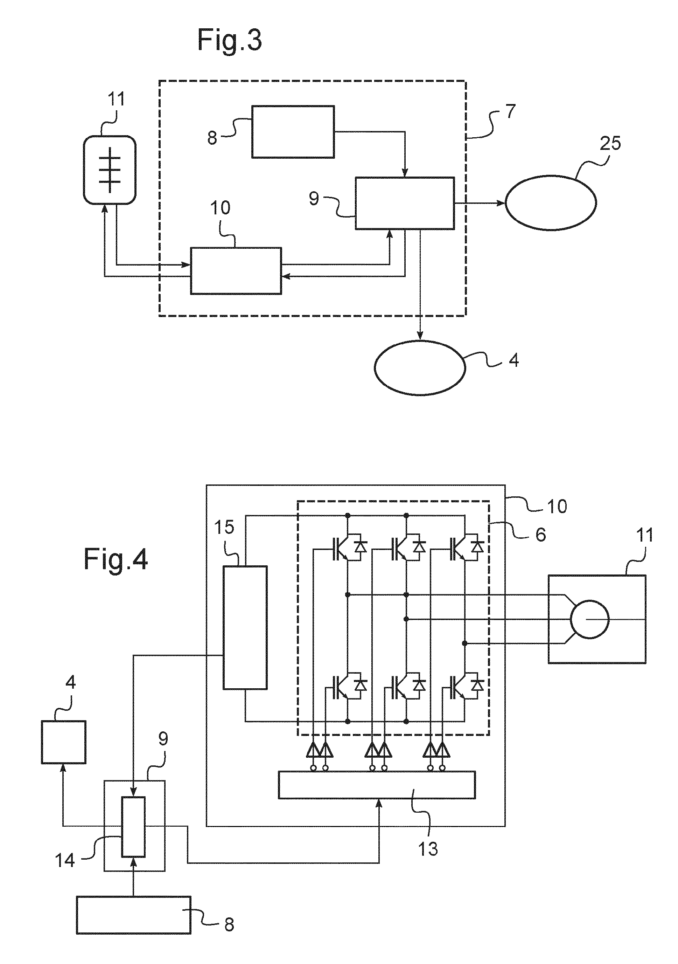

Selon un exemple de réalisation représenté sur les figures 3 et 4, le détecteur de fuites 1 comporte un moyen électronique de contrôle 7 comprenant :
- une carte d'alimentation 8 formant un moyen d'alimentation par exemple apte à délivrer une tension continue de 24 V,
- une carte de supervision 9 (ou carte mère) connectée à la carte d'alimentation 8,
- une carte variateur de vitesse 10 pilotée par la carte de supervision 9 pour la commande de la vitesse de rotation du moteur 11 de la pompe à vide secondaire 3.

Le pilotage du moteur 11 de la pompe à vide secondaire 3 est par un exemple un pilotage en courant. La carte de supervision 9 est également configurée pour piloter d'autres fonctions de la pompe à vide secondaire 3 et pour gérer l'alimentation de la cellule d'analyse des gaz du spectromètre 12, pour piloter les première et deuxième vannes électromagnétiques d'isolation 29 et 20, pour dialoguer avec une interface utilisateur du détecteur de fuites 1, tel qu'un boîtier de télécommande ou un panneau de contrôle du moyen d'information 4.

Le moyen de récupération d'énergie est par exemple configuré pour récupérer l'énergie cinétique générée par la rotation du rotor par l'intermédiaire du moteur 11 de la pompe à vide secondaire 3.

Mieux visible sur l'exemple de réalisation du moyen de récupération d'énergie illustré en figure 4, la carte variateur de vitesse 10 comporte une unité de commande 13, telle qu'un microprocesseur et un convertisseur électronique de puissance réversible 6, tel qu'un onduleur réversible de tension (ou de courant) ou hacheur.

La sortie de l'onduleur réversible 6 est connectée aux phases du moteur électrique 11 de la pompe à vide secondaire 3. L'entrée de l'onduleur réversible 6 est connectée à l'alimentation 14 de la carte de supervision 9.

Selon l'exemple représenté, le moteur électrique 11 est triphasé et l'onduleur réversible 6 comprend un circuit de trois branches couplées en parallèle. Chaque branche comprend un couplage en série de deux montages comprenant chacun un interrupteur piloté par l'unité de commande 13. Chaque interrupteur comporte par exemple une diode et un transistor de puissance couplés en parallèle. Les deux diodes sont montées dans le même sens passant.

Selon un autre exemple de réalisation non représenté, le moteur électrique 11 est biphasé et l'onduleur réversible 6 comprend un circuit de deux branches couplées en parallèle.

La carte variateur de vitesse 10 peut également comporter une réserve d'énergie réalisée sous la forme d'une capacité qui limite la vitesse de la chute de tension.

En outre, la carte de supervision 9 est configurée pour piloter la carte variateur de vitesse 10 qui commande les interrupteurs de l'onduleur réversible 6 pour récupérer l'énergie générée par le moteur 11 lorsqu'il est entraîné en rotation par le rotor.

La carte variateur de vitesse 10 peut comporter également un convertisseur de tension continu-continu (DC/DC) 15. Le convertisseur de tension 15 est connecté entre l'entrée de l'onduleur réversible 6 et l'alimentation 14 de la carte de supervision 9. Il permet de convertir la tension continue récupérée du moteur de l'ordre de 90V en une tension compatible avec l'alimentation 14 de la carte de supervision 9 de l'ordre de 24V. Egalement, pour des raisons de sécurité, la carte variateur de vitesse 10 peut comporter des moyens d'isolation galvanique pour isoler la zone sous tension de 90V de la zone sous tension de 24V (non représentés). Alternativement, on utilise un moteur électrique alimenté directement en 24V.

Ainsi, lorsque le détecteur de fuites 1 est alimenté, la carte d'alimentation 8 alimente la carte de supervision 9 qui pilote la carte variateur de vitesse 10 de manière à alimenter le moteur 11 qui entraîne à son tour le rotor de la pompe à vide secondaire 3 en rotation.

Puis, lorsque l'utilisateur commande l'arrêt du détecteur de fuites 1, la carte d'alimentation 8, et donc l'alimentation du moteur, est coupée. L'énergie cinétique accumulée et l'inertie font que le rotor continue quand même de tourner. Le moteur électrique 11 est alors entraîné mécaniquement en rotation par le rotor, fonctionnant en générateur de courant et fournissant de l'énergie électrique en sortie de l'onduleur réversible 6.

La carte variateur de vitesse 10 pilote l'onduleur réversible 6 pour récupérer cette énergie électrique et réalimenter la carte de supervision 9 à la place de la carte d'alimentation 8 (étape 101 du procédé de contrôle du détecteur de fuites 100).

Plus spécifiquement, l'unité de commande 13 de la carte variateur de vitesse 10 surveille la tension aux bornes de moteur 11. En cas de baisse de cette tension, l'unité de commande 13 commande les transistors de puissance de manière à relever la tension à une valeur suffisante pour la régénérer en une tension exploitable. Puis, le convertisseur de tension continu-continu 15 à large plage d'entrée transforme la tension issue du moteur de 90V en 24V continu stabilisé.

Tant que la pompe à vide secondaire 3 tourne à une vitesse supérieure à un seuil de vitesse (par exemple 10 000 tours/minutes), l'intensité fournie par la rotation du moteur est récupérée à travers la carte variateur de vitesse 10 qui transmet cette intensité à la carte de supervision 9 ainsi maintenue alimentée et donc en fonctionnement.

La carte de supervision 9 est par exemple configurée pour alimenter un écran du moyen d'information 4 et afficher un message d'alerte sur l'écran lorsque la carte de supervision 9 est alimentée par l'énergie récupérée (étape 102). Le message d'alerte indique par exemple à l'utilisateur de ne pas déplacer le détecteur de fuites 1.

Avec la diminution de la vitesse de rotation du rotor, on observe la baisse de l'énergie récupérée jusqu'à ce que celle-ci ne soit plus suffisante pour alimenter la carte de supervision 9. Il en résulte que le message n'est plus maintenu sur le panneau de contrôle. L'utilisateur peut alors déplacer le détecteur de fuites 1 en toute sécurité.

Il n'est donc plus nécessaire à l'utilisateur de connaître précisément la durée d'attente préconisée par le fabricant. C'est la baisse de la puissance d'alimentation du moyen d'information 4 qui signale la fin du délai d'attente indépendamment du type de pompe à vide secondaire 3 ou de la vitesse de rotation au moment de la commande d'arrêt.

En outre dans cet exemple, en plus de l'utilisation de l'énergie récupérée pour alimenter le moyen d'information, on peut également utiliser l'énergie récupérée pour piloter la remise à la pression atmosphérique de la pompe à vide primaire 2 lorsque le moteur n'est plus alimenté.

Pour cela, le détecteur de fuites 1 comporte un moyen de remise à la pression atmosphérique comportant une vanne électromagnétique 25 raccordée à la canalisation de pompage 28 du détecteur de fuites 1 entre la pompe à vide primaire 2 et la pompe à vide secondaire 3. En outre, la carte de supervision 9 est configurée pour piloter l'ouverture de la vanne électromagnétique 25 lorsque la carte de supervision 9 est alimentée par l'énergie récupérée (figure 3).

Ainsi, l'énergie cinétique est récupérée sous forme d'énergie électrique et est convertit pour alimenter la carte de supervision 9 qui alimente le moyen d'information 4 et commande l'ouverture de la vanne électromagnétique 25.

La vanne électromagnétique 25 permet ainsi l'introduction de gaz, tel que l'air de l'atmosphère environnante, dans la canalisation de pompage 28 lorsque la pompe à vide secondaire 3 est arrêtée, jusqu'à la remise à la pression atmosphérique de la pompe à vide primaire 2 bien que l'alimentation du détecteur de fuites 1 soit coupée. On évite ainsi la remontée d'huile dans la canalisation de pompage.

On peut également utiliser l'énergie récupérée pour alimenter d'autres composants du détecteur de fuites 1 lorsque le moteur n'est plus alimenté, tels que des diodes électroluminescentes ou des cartes électroniques.

L'énergie cinétique accumulée ainsi récupérée et utilisée pour alimenter le moyen d'information du détecteur de fuites informe ainsi l'utilisateur lorsqu'il peut déplacer le détecteur de fuites sans risque. Il n'est donc plus nécessaire à l'utilisateur de connaître précisément la durée d'attente préconisée par le fabricant. Le détecteur de fuites permet ainsi de diminuer les risques de grippage provoqués par un déplacement trop hâtif du détecteur de fuites après son arrêt.

## Revendications

1. Procédé de contrôle d'un détecteur de fuites comportant :
- une pompe à vide secondaire destinée à être raccordée à une pompe à vide primaire, la pompe à vide secondaire comportant un moteur, un rotor et un stator, ledit rotor étant susceptible d'être entraîné en rotation dans le stator par le moteur lorsque le moteur est alimenté, et
- au moins un moyen d'information apte à être alimenté électriquement, pour informer un utilisateur de l'état de fonctionnement du détecteur de fuites,
**caractérisé en ce qu'**en cas de coupure de l'alimentation du moteur, on récupère l'énergie cinétique de rotation du rotor de la pompe à vide secondaire sous forme d'énergie électrique (101) pour alimenter le moyen d'information (102).

2. Procédé de contrôle selon la revendication 1, **caractérisé en ce qu'**on récupère l'énergie cinétique de rotation du rotor par l'intermédiaire du moteur.

3. Procédé de contrôle selon l'une des revendications 1 ou 2, **caractérisé en ce qu'**on affiche un message d'alerte sur un écran du moyen d'information lorsque l'écran est alimenté par l'énergie récupérée.

4. Procédé de contrôle selon l'une des revendications 1 à 3, pour un détecteur de fuites comportant une pompe à vide primaire, **caractérisé en ce qu'**on utilise l'énergie récupérée pour alimenter un moyen de remise à la pression atmosphérique de la pompe à vide primaire et rétablir la pression atmosphérique à l'entrée de la pompe à vide primaire.

5. Détecteur de fuites comportant :
- une pompe à vide secondaire (3) destinée à être raccordée à une pompe à vide primaire (2), la pompe à vide secondaire (3) comportant un moteur, un rotor et un stator, ledit rotor étant susceptible d'être entraîné en rotation dans le stator par le moteur lorsque le moteur est alimenté, et
- au moins un moyen d'information (4) apte à être alimenté électriquement, pour informer un utilisateur de l'état de fonctionnement du détecteur de fuites (1), **caractérisé en ce que** le détecteur de fuites comporte en outre un moyen de récupération d'énergie pouvant récupérer l'énergie cinétique de rotation du rotor de la pompe à vide secondaire (3) sous forme d'énergie électrique pour alimenter le moyen d'information (4).

6. Détecteur de fuites selon la revendication 5, **caractérisé en ce que** le moyen de récupération d'énergie est configuré pour récupérer l'énergie générée par le moteur de la pompe à vide secondaire (3).

7. Détecteur de fuites selon la revendication 6, **caractérisé en ce qu'**il comporte un moyen électronique de contrôle (7) comprenant :
- une carte de supervision (9) connectée à un moyen d'alimentation,
- une carte variateur de vitesse (10) pilotée par la carte de supervision (9) pour la commande de la vitesse de rotation du moteur de la pompe à vide secondaire (3), la carte variateur de vitesse (10) comportant un convertisseur électronique de puissance réversible (6) dont l'entrée est connectée au moyen d'alimentation de la carte de supervision (9), la carte de supervision (9) étant également configurée pour piloter la carte variateur de vitesse (10) pour récupérer l'énergie générée par le moteur (11).

8. Détecteur de fuites selon la revendication 7, **caractérisé en ce que** la carte de supervision (9) est configurée pour alimenter un écran du moyen d'information (4) et afficher un message d'alerte sur l'écran lorsque la carte de supervision est alimentée par l'énergie récupérée.

9. Détecteur de fuites selon l'une des revendications 7 ou 8, comportant une pompe à vide primaire (2) **caractérisé en ce que** le détecteur de fuites comporte un moyen de remise à la pression atmosphérique de la pompe à vide primaire (2) et **en ce que** la carte de supervision (9) est également configurée pour piloter l'ouverture d'une vanne électromagnétique (25) du moyen de remise à la pression atmosphérique lorsque la carte de supervision (9) est alimentée par l'énergie récupérée.

## Patentansprüche

1. Verfahren zum Steuern eines Leckdetektors, der Folgendes umfasst:
- eine sekundäre Vakuumpumpe, die dazu bestimmt ist, mit einer primären Vakuumpumpe verbunden zu werden, wobei die sekundäre Vakuumpumpe einen Motor, einen Rotor und einen Stator enthält, wobei der Rotor in dem Stator durch den Motor rotatorisch angetrieben werden kann, wenn der Motor gespeist wird, und
- wenigstens ein Datenverarbeitungsmittel, das elektrisch gespeist werden kann, um einen Anwender über den Funktionszustand des Leckdetektors zu informieren,
**dadurch gekennzeichnet, dass** im Fall einer Unterbrechung der Speisung des Motors die kinetische Rotationsenergie des Rotors der sekundären Vakuumpumpe in Form elektrischer Energie (101) wiedergewonnen wird, um das Datenverarbeitungsmittel (102) zu speisen.

2. Steuerverfahren nach Anspruch 1, **dadurch gekennzeichnet, dass** die kinetische Rotationsenergie des Rotors über den Motor wiedergewonnen wird.

3. Steuerverfahren nach einem der Ansprüche 1 oder 2, **dadurch gekennzeichnet, dass** eine Warnmeldung auf einem Bildschirm des Datenverarbeitungsmittels angezeigt wird, wenn der Bildschirm mit wiedergewonnener Energie gespeist wird.

4. Steuerverfahren nach einem der Ansprüche 1 bis 3 für einen Leckdetektor, der eine primäre Vakuumpumpe enthält, **dadurch gekennzeichnet, dass** es die wiedergewonnene Energie verwendet, um ein Mittel zum Rücksetzen auf Atmosphärendruck der primären Vakuumpumpe zu speisen und um den Atmosphärendruck am Eingang der primären Vakuumpumpe wiederherzustellen.

5. Leckdetektor, der Folgendes umfasst:
- eine sekundäre Vakuumpumpe (3), die dazu bestimmt ist, mit einer primären Vakuumpumpe (2) verbunden zu werden, wobei die sekundäre Vakuumpumpe (3) einen Motor, einen Rotor und einen Stator enthält, wobei der Rotor in dem Stator durch den Motor rotatorisch angetrieben werden kann, wenn der Motor gespeist wird, und
- wenigstens ein Datenverarbeitungsmittel (4), das elektrisch gespeist werden kann, um einen Anwender über den Funktionszustand des Leckdetektors (1) zu informieren,
**dadurch gekennzeichnet, dass** der Leckdetektor außerdem ein Energiewiedergewinnungsmittel umfasst, um kinetische Rotationsenergie des Rotors der sekundären Vakuumpumpe (3) in Form elektrischer Energie wiederzugewinnen, um das Datenverarbeitungsmittel (4) zu speisen.

6. Leckdetektor nach Anspruch 5, **dadurch gekennzeichnet, dass** das Energiewiedergewinnungsmittel konfiguriert ist, Energie, die durch den Motor der sekundären Vakuumpumpe (3) erzeugt wird, wiederzugewinnen.

7. Leckdetektor nach Anspruch 6, **dadurch gekennzeichnet, dass** er ein elektronisches Steuermittel (7) umfasst, das Folgendes enthält:
- eine Überwachungskarte (9), die mit einem Speisemittel verbunden ist,
- eine Drehzahlverstellkarte (10), die durch die Überwachungskarte (9) vorgesteuert wird, um die Drehzahl des Motors der sekundären Vakuumpumpe (3) zu steuern, wobei die Drehzahlverstellkarte (10) einen reversiblen elektronischen Leistungsumsetzer (6) umfasst, dessen Eingang mit dem Speisemittel der Überwachungskarte (9) verbunden ist, wobei die Überwachungskarte (9) außerdem konfiguriert ist, die Drehzahlverstellkarte (10) vorzusteuern, um von dem Motor (11) erzeugte Energie wiederzugewinnen.

8. Leckdetektor nach Anspruch 7, **dadurch gekennzeichnet, dass** die Überwachungskarte (9) konfiguriert ist, einen Bildschirm des Datenverarbeitungsmittels (4) zu speisen und eine Warnmeldung auf dem Bildschirm anzuzeigen, wenn die Überwachungskarte mit wiedergewonnener Energie gespeist wird.

9. Leckdetektor nach einem der Ansprüche 7 oder 8, der eine primäre Vakuumpumpe (2) umfasst, **dadurch gekennzeichnet, dass** der Leckdetektor ein Mittel zum Rücksetzen auf Atmosphärendruck der primären Vakuumpumpe (2) umfasst und dass die Überwachungskarte (9) außerdem konfiguriert ist, das Öffnen eines elektromagnetischen Ventils (25) des Mittels zum Rücksetzen auf Atmosphärendruck vorzusteuern, wenn die Überwachungskarte (9) mit wiedergewonnener Energie gespeist wird.

## Claims

1. A method for monitoring a leak detector comprising:
a secondary vacuum pump designed to be connected to a primary vacuum pump, the secondary vacuum pump comprising a motor, a rotor and a stator, the said rotor being capable of being rotated in the stator by the motor when the motor is powered, and
at least one information means capable of being powered electrically, in order to inform a user of the operating state of the leak detector,
**characterized in that**, in the event of the motor power supply being cut off, the kinetic energy of rotation of the secondary vacuum pump rotor is recovered in the form of electrical power (101) in order to power the information means (102).

2. The monitoring method according to Claim 1, **characterized in that** the kinetic energy of rotation of the rotor is recovered by means of the motor.

3. The monitoring method according to Claim 1 or 2, **characterized in that** an alarm message is displayed on a screen of the information means when the screen is powered by the recovered energy.

4. The monitoring method according to Claim 1 to 3, for a leak detector comprising a primary vacuum pump, **characterized in that** the recovered energy is used to power a means of returning the primary vacuum pump to atmospheric pressure and to re-establish atmospheric pressure at the inlet of the primary vacuum pump.

5. A leak detector comprising:
a secondary vacuum pump (3) designed to be connected to a primary vacuum pump (2), the secondary vacuum pump (3) comprising a motor, a rotor and a stator, the said rotor being capable of being rotated in the stator by the motor when the motor is powered, and
at least one information means (4) capable of being electrically powered, to inform a user of the operating state of the leak detector (1),
**characterized in that** the leak detector also comprises an energy-recovery means that can recover the kinetic energy of rotation of the secondary vacuum pump (3) rotor in the form of electrical energy to power the information means (4).

6. The leak detector according to Claim 5, **characterized in that** the energy recovery means is configured to recover the energy generated by the motor of the secondary vacuum pump (3).

7. The leak detector according to Claim 6, **characterized in that** it comprises an electronic control means (7) comprising:
a supervision board (9) connected to a power supply means,
a speed variator board (10) driven by the supervision board (9) for commanding the rotation speed of the motor of the secondary vacuum pump (3), the speed variator board (10) comprising a reversible electronic power converter (6) the input of which is connected to the power supply means of the supervision board (9), the supervision board (9) also being configured to drive the speed variator board (10) to recover the energy generated by the motor (11).

8. The leak detector according to Claim 7, **characterized in that** the supervision board (9) is configured to power a screen of the information means (4) and display an alarm message on the screen when the supervision board (9) is powered by the recovered energy.

9. The leak detector according to one of claims 7 or 8, comprising a primary vacuum pump (2), **characterized in that** the leak detector comprises a means for returning the primary vacuum pump (2) to atmospheric pressure and **in that** the supervision board (9) is also configured to control the opening of an electromagnetic valve (25) of the means for returning to atmospheric pressure when the supervision board (9) is powered by the recovered energy.
